# EUROPÄISCHE PATENTSCHRIFT

(11) **EP 1 372 925 B1**
(45) Veröffentlichungstag und Bekanntmachung des Hinweises auf die Patenterteilung: **14.12.2005**
(21) Anmeldenummer: 02735125.3
(22) Anmeldetag: 12.03.2002
(51) Int. Cl.: B29C 44/12, B29C 70/02, B32B 5/26, B32B 5/18

(54) **VERSTARKUNGSMATERIAL MIT VOLUMISIERTEN FASERN UND VERFAHREN ZU DESSEN HERSTELLUNG**
REINFORCING MATERIAL COMPRISING VOLUMIZED FIBERS AND METHOD FOR PRODUCING SAID MATERIAL
MATERIAU DE RENFORCEMENT CONTENANT DES FIBRES VOLUMISEES ET PROCEDE DE FABRICATION

(30) Priorität: 26.03.2001 DE 10114708
(43) Veröffentlichungstag der Anmeldung: 02.01.2004
(73) Patentinhaber: Kölzer, Klaus Kurt, 40721 Hilden (DE)
(72) Erfinder: Kölzer, Klaus Kurt, 40721 Hilden (DE)
(74) Vertreter: Gille Hrabal Struck Neidlein Prop Roos
(86) Internationale Anmeldenummer: PCT/EP2002/002692
(87) Internationale Veröffentlichungsnummer: WO 2002/076701

(56) Entgegenhaltungen:
- EP-A- 0 222 399
- EP-A- 1 010 793
- GB-A- 1 443 754
- US-A- 4 747 346

## Beschreibung

Die Erfindung betrifft ein Verstärkungsmaterial für Duroplaste, ein Verfahren zu seiner Herstellung sowie seine Verwendungsweise.

Bei der Herstellung von Formteilen aus Kunststoff ist man in zunehmendem Maße aus konstruktiven Gründen und aus Gründen der Wirtschaftlichkeit bestrebt, das Gewicht zu reduzieren, ohne die mechanischen Festigkeiten zu beeinträchtigten.

Durch das Verstärken von Kunststoffen mit Fasern entstehen sogenannte Faserverbundwerkstoffe, die sich gegenüber den unverstärkten Kunststoffen durch einen wesentlich höheren Elastizitätsmodul auszeichnen, d.h. eine höhere Steifigkeit und damit eine höhere Belastbarkeit besitzen. Insbesondere Faserverbundwerkstoffe aus Duroplasten, wie den klassischen Amino- und Phenoplasten, Epoxidharzen (EP-Harze), Polyester- (UP-Harze) und anderen Reaktionsharzen finden breite und vielseitige Einsatzgebiete, u.a. als härtbare Formmassen, Schichtpressstoffe, Gießharze oder für den Oberflächenschutz.

Glasfaserverstärkte Epoxid- oder Polyesterharze zählen zu den gebräuchlichsten Faserverbundwerkstoffen. Formteile aus diesem Werkstoff werden hergestellt, indem man die Glasfasern mit den flüssigen duroplastischen Harzen benetzt und in eine Form bringt. Das Aushärten wird durch einen dem flüssigen Kunststoffharz zugesetzten Katalysator bewirkt. Glasfaserverstärkte Kunststoffe werden drucklos oder durch verschiedene Niederdruckverfahren geformt und verarbeitet und zwar bevorzugt zu großen Formstücken, wie Bootskörpern, Fahrzeugteilen, Lagerbehältern, Rohren usw., die sich durch eine ungewöhnlich hohe Gebrauchsfestigkeit bei niedrigem Gewicht auszeichnen. Die Gebrauchs- und Festigkeitseigenschaften derartiger Materialien hängen einerseits von der Qualität der Verstärkungsfaser und der verwendeten Harze und andererseits von dem Gewichtsverhältnis der Verstärkungsfasern zur Harzmatrix ab. Die Festigkeitswerte sind umso besser, je höher der Gewichtsanteil der Verstärkungsfasern ist.

Bei der Herstellung großvolumiger Formteile und bei der Herstellung kleinerer Formteilserien, zu deren Anfertigung die Herstellung teurer Presswerkzeuge wirtschaftlich nicht vertretbar ist, wird im drucklosen Verfahren gearbeitet. Unter den drucklosen Verfahren ist z.B. das Handlaminieren zu nennen, bei dem das Formteil schichtweise aus Flächengebilden, wie Matten, Geweben, Vliesen und dergleichen, die mit flüssigem Harz benetzt sind, bis zu der gewünschten Materialstärke aufgebaut wird.

Ebenfalls drucklos arbeitet das Wickelverfahren, bei dem harzgetränkte Verstärkungsbahnen oder -faserstränge auf einen Dorn oder zylinderförmige Formen aufgewickelt und gehärtet werden. Bei dem Zieh-Verfahren werden Verstärkungsbahnen oder - faserstränge ebenfalls mit Harz benetzt und abschließend durch Profildüsen gezogen. Der Anteil von Verstärkungsfasern am Gesamtgewicht eines Faserverbundwerkstoffes, der für die Festigkeitseigenschaften bestimmend ist, kann bei den drucklosen Verfahren jedoch nur in bestimmten Grenzen beeinflusst werden. Beim Tränken von Verstärkungsfasern mit flüssigen Harzen füllen sich entsprechend der Saugfähigkeit der Fasern die zwischen den Elementarfäden liegenden Hohlräume mit Harz. Der Anteil der Verstärkungsfasern am Gesamtgewicht ist also umso geringer, je größer die Saugfähigkeit der Verstärkungsfasern, bezogen auf das Volumen, ist.

Die im Handel als Verstärkungsmaterial für Faserverbundwerkstoffe erhältlichen Glasfasern besitzen marktübliche Standardqualitäten mit definierter Harzaufnahmefähigkeit, die dem Konstrukteur eine Berechnung des spezifischen Gewichts und des Gesamtgewichts eines Formkörpers ermöglichen. Beispielsweise nehmen Glasfasermatten, die aus geschnittenen oder endlosen Spinnfäden bestehen, etwa 70 bis 75 Gew.% Harz auf, während die Aufnahmefähigkeit von Glasfasergeweben aus Garnen, Zwirnen oder Rovings etwa 40 bis 70 % erreicht.

Bei Gelegen, bei denen die Garne, Zwirne oder Rovings nicht miteinander verwebt, sondern durch Steppfäden an den Kreuzungspunkten miteinander verbunden sind, beträgt die Harzaufnahmefähigkeit noch etwa 40 bis 65 %.

Dementsprechend wird bei Laminaten, die aus Glasfasermatten hergestellt werden, ein spezifisches Gewicht von ca. 1,5 bis 1,7 erreicht, während das spezifische Gewicht von Geweben und Gelegen bei ca. 1,7 bis 2,0 liegt.

Zur Reduzierung des Gewichts von Kunststoffformteilen ohne Verlust an mechanischer Festigkeit kann bei gleichem Anteil an Verstärkungsfasern das Harz partiell durch Füllstoffe ersetzt werden, deren spezifisches Gewicht geringer ist als das des Tränkharzes. Demgemäß geeignet sind Leichtfüllstoffe, insbesondere sog. Hohlkörperfüllstoffe, auch "Microspheres" genannt, die sowohl anorganischer als auch organischer Natur sein können. Hohle Mikroglaskügelchen stellen einen Leichtfüllstoff dar, der das zur Dichteverminderung erforderliche geringe spezifische Gewicht aufweist. Derartige hohle Mikrokügelchen können auch aus einem polymeren organischen Material bestehen und sind z.B. unter dem Handelsnamen Expancel® mit einer thermoplastischen Schale aus einem Vinylidenchlorid-Acrylnitril-Copolymeren erhältlich. Die Korngröße liegt zwischen 50 und 300 µm und die Dichte beträgt etwa 20 bis 40 kg/m³.

Handelsüblich ist auch die ungeblähte Vorstufe dieser Hohlkörperfüllstoffe, z.B. auf Basis von Polyvinylchlorid oder Vinyliden-Acrylnitril-Copolymeren mit einem Blähmittel, wie z.B. Isobutan. Die ungeblähten Partikel (z.B. "unexpanded" Expancel®) besitzen Teilchengrößen von 5 bis 10 µm. Zum Aufblähen werden sie Temperaturen von etwa 80 bis 150°C ausgesetzt, die dem Erweichungspunkt des Materials der Mikrokügelchen entsprechen. Sobald der Erweichungspunkt erreicht ist, bläht das eingeschlossene Treibgas durch Verdampfung die einzelnen Füllstoffpartikel zu einer Hohlkugel auf.

Wegen des niedrigen Gewichts der Hohlkörperfüllstoffe ist versucht worden, sie zur Gewichtsreduzierung in Faserverbundwerkstoffe einzuarbeiten, indem man sie dem Laminierharz zumischte. Bei dieser Methode wird jedoch die Viskosität und damit das Laminierverhalten der Tränkharze nachteilig beeinflusst, und es gelingt nicht, die relativ grobkörnigen Hohlkörperfüllstoffe in die Zwischenräume der Verstärkungsfasern einzubringen, sondern sie werden an der Oberfläche zurückgehalten. Eine weitere Schwierigkeit liegt darin, dass die empfindlichen Hohlkörperfüllstoffe keiner großen mechanischen Belastung standhalten, so dass sie bereits beim Einrühren in das Laminierharz oder während des eigentlichen Laminierungsprozesses teilweise zerstört werden und damit nicht mehr zu der beabsichtigten Gewichtsminderung beitragen können.

Es ist auch bekannt, die unexpandierten Mikrokügelchen, zusammen mit dem Latex eines aushärtbaren Bindemittels auf eine Bahn von textilen Stapelfasern aufzusprühen und die so erhaltene Bahn auf den Erweichungspunkt des Thermoplasten der Mikrokügelchen zu erhitzen. Dadurch wird ein sehr voluminöses, nicht gewebtes Gebilde mit hoher Wasseradsorptionsfähigkeit erhalten, das für Staub- oder Wischtücher sowie als Verbandmaterial dienen kann (US-A-3676288). Solche gebundenen Faserbahnen wurden auch schon mit einem flüssigen Harz-Härter-Gemisch.imprägniert und für die Herstellung geformter faserverstärkter Kunststoffgegenstände verwendet. Hier eignen sie sich aber wegen ihrer geringen Festigkeit nur als Kernmaterial, während die Verstärkung der Duroplaste von endlosen Spinnfäden mit höherem Elastizitätsmodul als dem des ausgehärteten Duroplasten erbracht werden muss (DE-B-24 33 427).

Aus der europäischen Patentschrift EP 0 222 399 B1 ist bekannt, dem Verarbeiter ein fertiges Verstärkungsmaterial zur Verfügung zu stellen, das die oben beschriebenen Nachteile der Einarbeitung der Hohlkörperfüllstoffe in den Faserverbundwerkstoff vermeidet, und das eine Verringerung des spezifischen Gewichtes des Faserverbundwerkstoffes ohne Festigkeitseinbußen ermöglicht. Zur Herstellung eines solchen Verstärkungsmaterials werden die in einem Roving, Garn oder schwach gedrehten Zwirn parallel angeordneten endlosen Elementarfäden mit hohem Elastizitätsmodul mit einer wässrigen bindemittelfreien Suspension von Partikeln der ungeblähten Vorstufe der Hohlkügelchen aus Kunststoff einer Teilchengröße von 5 bis 10 µm aufspreizt oder von einander entfernt. Die entstandenen Zwischenräume werden weitgehend mit den Partikeln ausfüllt und das so erhaltene Material Wird für die erforderliche Dauer der für den Blähprozess der Partikel der Vorstufe erforderlichen Temperatur aussetzt. Es wird so, gemaß dem einleitenden Teil des Anspruch 1, ein Verstärkungsmaterial für Duroplaste erhalten. Ein wesentlicher Teil der parallelen, bindemittelfreien Elementarfäden sind aufgespreizt oder von einander entfernt. Die Hohlräume zwischen den Elementarfäden sind weitgehend von Hohlkügelchen aus Kunststoff mit 20 bis 300 µm Durchmesser ausgefüllt. Hierdurch wird die Harzaufnahmefähigkeit und das spezifische Gewicht im Vergleich zum vorgenannten Stand der Technik vermindert.

In Experimenten hat sich jedoch gezeigt, dass die Einbettung der Hohlkügelchen zwar eine erhebliche Gewichtseinsparung möglich ist, aber durch die eingelagerten Hohlkügelchen eine Strukturverdichtung eintritt, die die erwünschte schnelle Dränage mit Kunststoffharzen und eine schnelle Entlüftung behindern.

Der Erfindung liegt die Aufgabe zugrunde, gute Tränkungs- und Entlüftungseigenschaften mit geringer Harzaufnahme bei einem Verstärkungsmaterial zu erzielen.

Die Aufgabe wird durch ein Verstärkungsmaterial mit den Merkmalen des Haupt- sowie durch ein Verfahren mit den Merkmalen des Nebenanspruchs gelöst. Vorteilhafte Ausgestaltungen ergeben sich aus den abhängigen Ansprüchen.

Das anspruchsgemäße Verstärkungsmaterial für Duroplaste liegt als Matte oder Gelege vor, die volumisierte Fasern aufweist. Eine volumsierte Faser ist eine solche, bei der Hohlkügelchen - eingelagert sind. Im Unterschied zum Stand der Technik bestehen die verwendeten volumsierten Fasern entweder aus unterschiedlichen Materialien, und/oder es werden zusätzlich nicht volumisierte Fasern und/oder unterschiedlich volumisierte Fasern vorgesehen.

Experimente haben gezeigt, dass hierdurch die Dränage- und Entlüftungseigenschaften im Vergleich zum aus der Druckschrift EP 0 222 399 B1 bekannten Stand der Technik wesentlich verbessert werden. Bei der Weiterverarbeitung ist ferner der Harzverbrauch sehr gering.

Eine vorteilhaften Ausgestaltung betrifft ein aus den Fasern gebildetes Gelege, bei dem die Fasern erst nach der Volumisierung vernäht wurden. Die zum Vernähen benötigten Fäden stellen dabei keine Fasern im Sinne des Hauptanspruchs dar. Im Vergleich zum Stand der Technik gemäß Druckschrift EP 0222399 B1 beschränkt sich dann das ballonartige Aufblähen eines Faserstrangs nicht auf den Bereich zwischen den Kreuzungspunkten von Kette und Schuss. Einschnürungen an den Kreuzungspunkten werden so vermieden. Eine erheblich gleichmäßigere Materialoberfläche ist die Folge, weil die Nähfäden sich der Dimensionierung der volumisierten Fasern anpassen. Auch können volumisierte und nicht volumisierte Fasern miteinander kombiniert werden. Zu einem Endprodukt mit besonders großer Festigkeit führt ein Gelege, bei denen volumisierte Fasern und nicht volumisierte Fasern schichtweise angeordnet sind. Der Verlauf der volumisierte Fasern kreuzt den Verlauf der nicht volumisierten Fasern. Volumisierte Fasern sind parallel zueinander angeordnet. Nicht volumisierte Fasern sind ebenfalls parallel zueinander angeordnet. Der Verlauf der Nähfäden kreuzt sowohl den Verlauf der nicht volumisierte Fasern als auch den Verlauf der volumisierte Fasern. Zwei Schichten aus nicht volumisierten Fasern schließen bevorzugt eine Schicht aus volumisierten Fasern ein, um so zu Produkten mit hoher Festigkeit zu gelangen.

Allgemein können bei nachträglicher Vernähung volumisierte und nicht volumisierte Fadenstränge zur Erzielung bestimmter Eigenschaften beliebig kombiniert werden, um beispielsweise die Verarbeitungseigenschaften des Geleges zu beeinflussen. So können neben volumisierten Fasern mit einer dichteren Materialstruktur andere Fasern mit einer sehr offenen Materialstruktur gelegt werden. Diese nicht volumisierten Fasern können aus Kunststoffspinnfäden, Kunststoffmonofilamenten, Hohlfilamenten oder Glasfasersträngen bestehen. Hierdurch ist es möglich, beispielsweise die Dränageeigenschaften des Geleges für die Verarbeitungsverfahren individuell einzustellen, bei denen es auf einen schnellen Harzfluss und eine schnelle Entlüftung ankommt. Derartige Verfahren sind z.B. das Injektionsverfahren, Vakuumfolienverfahren, RTM (Resin Transfer Moulding), SCRIMP- Verfahren usw.. So ist es auch möglich den Abstand zwischen den Fadensträngen zu kontrollieren und so zu gestalten, dass durch eine geeignete Mischung von unterschiedlichen Fadenqualitäten und durch die Abstände zwischen den einzelnen Fäden "Dränagekanäle" entstehen. Es kann dem Fachmann überlassen bleiben, für den jeweiligen Anwendungsfall geeignete Mischungen zusammenzustellen. Bei den anspruchsgemäßen Gegenständen wird die Harzaufnahmefähigkeit und das spezifische Gewicht der üblichen Verstärkungsmaterialien für Duroplaste in Form von Rovings, Garnen oder schwach gedrehten Zwirnen oder daraus hergestellten Geweben, Gewirken oder Gelegen nachhaltig vermindert, ohne dass die Festigkeitseigenschaften damit hergestellter Verbundwerkstoffe beeinträchtigt werden. Die im Roving, Garn oder Zwirn (hier unter dem Begriff "Fasern" zusammengefasst) in der Regel parallel angeordneten endlosen Elementarfäden mit hohem Elastizitätsmodul mit einer wässrigen bindemittelfreien Suspension von Partikeln der ungeblähten Vorstufe der Hohlkügelchen aus Kunststoff aufspreizt oder voneinander entfernt und die entstandenen Zwischenräume weitgehend mit den Partikeln ausfüllt und das so erhaltene Material für die erforderliche Dauer der dem Blähprozess der Partikel der Vorstufe erforderlichen Temperatur aussetzt.

Wenn hier von endlosen Fasern oder Fäden die Rede ist, so sind damit im Gegensatz zu den höchstens wenige Zentimeter langen textilen Fasern bzw. Stapelfasern die sehr großen Längen gemeint, in denen die für Verstärkungszwecke üblichen Rovings, Garne oder schwach gedrehten Zwirne in den Handel kommen bzw. auch noch in den daraus hergestellten Geweben, Gewirken oder Gelegen vorliegen.

Durch den Herstellungsprozess bedingt sind die Elementarfasern in Spinnfäden, Parallelrovings, Endlosgarnen etc. in der Regel mit mehr oder weniger stark klebenden Schlichten versehen. Bei der Behandlung der endlosen Stränge mit der wässrigen Suspension der ungeblähten Mikrokugeln werden die wasserlöslichen Schlichten oder Bindemittel im Wasser gelöst und damit entfernt. Dadurch gelingt es, die Elementarfasern voneinander zu entfernen und wenigstens aufzuspreizen, so dass gleichzeitig die Partikel der ungeblähten Vorstufe der Hohlkügelchen in die entstandenen Zwischenräume eindringen und diese weitgehend ausfüllen können. Bevorzugt geschieht also das Lösen der Elementarfäden voneinander und das Einbringen der ungeblähten Mikrokügelchen gleichzeitig bei der Behandlung der Endlosstränge mit der wässrigen Suspension. Es ist aber auch möglich, die den Rovings, Garnen, oder Zwirnen anhaftenden Schlichten oder Bindemittel in einem getrennten Arbeitsgang vor dem Einbringen der Hohlkügelchen zu entfernen. Falls die Schlichte oder Verklebung nicht ausreichend wasserlöslich ist, kann man sich dafür auch eines Lösungsmittels bedienen.

Die Trennung der Elementarfäden voneinander und/oder das Einbringen der ungeblähten Hohlkügelchen in die Faserstränge kann z.B. dadurch geschehen, dass die Faserstränge in dem wässrigen Bad einem intensiven Walkprozess ausgesetzt werden, bei dem die parallel liegenden Elementarfäden der Verstärkungsfasern aufgespreizt werden und dadurch ein inniges Durchdringen mit den Füllstoffpartikeln möglich wird. Im Unterschied zum aus der Druckschrift EP 0 222 399 B1 bekannten Stand der Technik wird hier dem wässerigen Bad ein handelsübliches Bindemittel so zum Beispiel ein Acrylatbinder zugegeben. Man kann die Faserstränge Strahlen mit hohem Druck von beispielsweise 2 bis 10 bar aus der Suspension aussetzen, um die gewünschte Beweglichkeit der Elementarfäden gegeneinander zu erreichen und die ungeblähten Mikrokügelchen dazwischen einzulagern. Für die Behandlung von Geweben, Gewirken oder Gelegen aus den Endlosfasern gilt das gleiche. Nach dem Einbringen der Partikel werden die Faserstränge oder Bahnen mit geeigneten Mitteln, z.B. Gummilippen oder Durchlaufösen so abgestreift, dass keine ungeblähten Hohlkügelchen lose auf der Oberfläche zurückbleiben, die den weiteren Verarbeitungsprozess stören würden. Die auf diese Weise behandelten Faserstränge oder Bahnen werden dann durch einen Trockentunnel gezogen und dort mit Luft und Wärme getrocknet. Die nunmehr trocken zwischen den Fasersträngen eingebetteten Kügelchen können aufgrund des Bindemittels aus den Rovings, Garnen oder schwach gedrehten Zwirnen mit den parallel angeordneten endlosen Elementarfäden nicht herausfallen, unabhängig davon, ob die Stränge unter Spannung stehen und die Elementarfäden die zwischen ihnen liegenden Kügelchen einklemmen oder nicht. Der Verarbeitungsprozess ist aufgrund des Bindemittels erheblich unkomplizierte und einfacher im Vergleich zum vorbekannten Verarbeitungsprozess.

Nach dem Trocknen werden die Faserstränge oder Bahnen bei einer Temperatur von 80 bis 150 °C durch einen Heizofen gezogen, wobei die Einwirkungsdauer 15 Sekunden bis etwa 15 Minuten beträgt. Durch die Temperatureinwirkung bläht das Treibgas die Mikrokugeln bis zu einem Durchmesser von etwa 20 bis 300 µm auf, und die expandierenden Mikrohohlkügelchen drücken die Elementarfäden der Faser bzw. des Faserstranges auseinander und füllen die Zwischenräume weitgehend aus, wodurch sich der Durchmesser des Faserstranges oder die Dicke der daraus hergestellten Flächengebilde um das 2- bis 30-fache vergrößern kann. Im Unterschied zum Stand der Technik ist es nicht mehr erforderlich, den Blähprozess so zu führen, dass die Mikrokügelchen gegen Ende miteinander leicht versintern und gleichzeitig eine gewisse Verbindung zu den Elementarfäden erhalten. Gerade dieser Versinterungsschritt ist nämlich sehr schwierig durchzuführen, da dabei ein sehr enger Temperaturbereich eingehalten werden muss.

Durch das Verfahren wird ein für Duroplaste geeignetes Verstärkungsmaterial erhalten, das Hohlkörperfüllstoffe einer Partikelgröße zwischen 20 und 300 µm enthält und in dieser Form direkt dem Verarbeiter zur Verfügung gestellt werden kann. Die Harzaufnahmefähigkeit kann je nach Zugabemenge der Füllstoffpartikel und Intensität der Temperaturbehandlung stufenlos bis zu einem Punkt, bei dem keine weitere Aufnahme mehr möglich ist, eingestellt werden.

Als Fasermaterial zur Herstellung des Duroplast-Verstärkungsmaterials kommen aus Preisgründen vorwiegend Glasfasern in Betracht, jedoch sind Modifikationen des Verstärkungsmaterials durch Verwendung anderer Fasern mit hohem Elastizitätsmodul, wie Kohlenstoff oder Aramidfasern, möglich.

Als besonders geeignet für die Ausstattung mit Hohlkörperfüllstoffen haben sich Verstärkungsfasern in Form von Geweben oder Gelegen erwiesen. Soll eine besonders hohe Festigkeit erzielt werden, sind Gelege vorzuziehen.

Die schon oben erwähnten Gelege werden beispielsweise dadurch hergestellt, dass Rovings, Garne oder schwach gedrehte Zwirne aus den Endlosfasern mit Hilfe spezieller Maschinen, z.B. "Malimo"-Nähwerkautomaten definierte Längen, z.B. die Produktionsbreite von etwa 100 cm, abgelängt werden und diese wie Sprossen einer Strickleiter mit Wirkfäden zu einem Flächengebilde verbunden werden. In diesem Fall durchlaufen die Faserstränge den Produktionsprozess quer und nicht in Längsrichtung. Nach der "Malimo"-Technik können die querliegenden Faserstränge zusätzlich mit längsliegenden Fasersträngen verbunden werden, indem die Stränge an ihren Kreuzungspunkten miteinander vernäht werden.

Eine andere Möglichkeit, endlose Faserstränge zu einem Flächengebilde zu verbinden, ist das Verweben. Die Gewebestruktur spielt für die Beschaffenheit des Endprodukts eine wesentliche Rolle. Im Unterschied zum Stand der Technik werden hier die Fasern vor dem Verweben und nicht die fertigen Flächengebilde aufgebläht. Einschnürungen an Kreuzungspunkten von Kette und Schuß werden so vermieden.

Zum Beispiel verzahnen sich beim Aufeinanderlegen mehrerer Lagen derartiger Flächengebilde die einzelnen Lagen miteinander, wodurch bei Schichtwerkstoffen eine hohe interlaminare Scherfestigkeit zustande kommt.

Beim Stand der Technik waren Einschnürungen aufgrund der sich bildenden Kanäle erwünscht, um bei Verwendung des Materials im Pressverfahren oder bei der Vakuuminjektion ein hervorragendes Fließverhalten und gleichmäßiges Verteilen des flüssigen Harzes innerhalb des Formteiles möglich zu machen. Diese Einschnürungen sind nun nicht mehr erforderlich, da das Problem in oben genannter Weise verbessert gelöst wird.

Sowohl bei dem strangförmigen, als auch dem flächigen Verstärkungsmaterial sind die Hohlkügelchen vorzugsweise in einer solchen Menge eingelagert, dass die Dicke das 2-bis 30-fache, insbesondere 5- bis 10-fache der Dicke des Ausgangsmaterials beträgt.

Verfahrensgemäß werden Fasern unterschiedlich volumisiert, indem erste Fasern mit einer ersten wässrigen bindehaltigen Suspension und zweite Fasern mit einer zweiten wässrigen bindehaltigen Suspension aufgespreizt werden, wobei die erste wässrige bindehaltige Suspension einen anderen Binder und/ oder eine andere Menge an Binder enthält als die zweite Suspension. Auf diese Weise kann ein gewünschter unterschiedlicher Volumisierungsgrad erzielt werden.

Die Menge des eingesetzten Acrylatbinders kann bei 1 bis 50 Gewichtsprozent, bezogen auf das spezifische Gewicht der expandierten Kügelchen liegen.

Alternativ können Fasern unterschiedlich volumisiert werden, indem erste Fasern und zweite Fasern volumisiert werden, wobei die ersten Fasern stärker als die zweiten Fasern gedreht sind. Die unterschiedlich gedrehten Fasern werden im übrigen mit den gleichen Verfahrens-schritten voluminisiert.

Eine unterschiedliche Voluminisierung im Sinne der Erfindung liegt vor, wenn die unterschiedliche Voluminisierung gezielt zum Beispiel in der vorbeschriebenen Weise herbeigeführt worden ist. Erste und zweite Fasern sind also gesteuert unterschiedlich voluminisiert worden. Es ergeben sich dann beispielsweise unterschiedliche Faserstärken von wenigstens 50%. Die unterschiedlichen Faserstärken können sich auch um das zwei bis dreifache unterscheiden.
Die Verstärkungsmaterialien werden bevorzugt zur Herstellung von Leichtlaminaten aus Duroplasten verwendet.

### Beispiel

Ein Parallelroving mit 12240 Endloselementarfasern aus Glas wird mit einer Geschwindigkeit von 2 m pro Minute von einer 10000 m Vorratsspule abgezogen und durch einen Bad einer wässrigen Suspension geführt, die 10 Gew.% unexpanded Expancel® enthält. Darüber hinaus befindet sich in der Suspension ein Acrylatbinder. Bezogen auf das Gewicht der eingesetzten Kügelchen wurden 1 bis 50 Gew.-% eines handelsüblichen Acrylatbinders eingesetzt. Der Strang wird in dem Bad Ultraschallwingungen aus einem handelsüblichen Generator ausgesetzt. Äußerlich anhaftende Partikel und überschüssiges Wasser werden beim Durchlaufen des Stranges durch eine entsprechend dimensionierte Öse abgestreift. Der so behandelte Parallelroving hat 8 Gew.% Partikel aufgenommen und wird durch einen Trockentunnel gezogen, in den Heißluft von 80 °C eingeführt wird. Anschließend wird der Faserstrang durch einen mit Infrarotstrahlern beheizten Ofen gezogen, den er mit 150°C verlässt. Die Verweildauer im Ofen beträgt 3 Minuten. Die Hohlkügelchen haben im Mittel einen Durchmesser von 60 µm angenommen und der Faserstrang hat seinen Durchmesser um das zehnfache vergrößert.

Derartige Fasern wurden unter anderem mit nicht volumisierten Fasern zu Gelegen in an für sich bekannter Weise weiterverarbeitet.

Hergestellt wurde ein Verstärkungsmaterial, bei dem unterschiedlich volumisierte Fasern verarbeitet wurden. Der Durchmesser unterschied sich um wenigstens wenigstens 100%.

Ein weiteres Verstärkungsmaterial wurde durch volumisierte Schnittfaserstapel gebildet.

Bei einem weiteren Verstärkungsmaterial wurden volumisierte und nicht volumisierte Fasern verwendet.

Bei einem nächsten Verstärkungsmaterial wurden volumisierte Fäden sowie Endlosfäden mit Lagen aus volumisierten und geschnittenen Stapelfasern mit einer Länge von 0,5 bis 10 cm eingesetzt.

Die Verstärkungsmaterialien umfassten zur Lösung der Aufgabe der Erfindung beispielsweise Fasern, die sich durch unterschiedlich harte Fasern unterschieden und/ oder die eine unterschiedliche Löslichkeit nach der Benetzung mit der verwendeten Harzmatrix aufwiesen.

Alternativ oder ergänzend zur beschriebenen Ultraschallbehandlung können die Fasern mit der Suspension besprüht werden oder in der wässrigen Suspension gewalzt oder kalandriert werden.

## Patentansprüche

1. Verstärkungsmaterial gebildet aus volumisierten Fasern, indem zwischen den Elementarfäden der Fasern Hohlkügelchen eingelagert worden sind, die in Form einer Matte oder Geleges zusammengefasst sind, **dadurch gekennzeichnet, dass** sich die volumisierten Fasern hinsichtlich des Materials und/ oder des Grades der Volumisierung unterscheiden und/oder dass nicht volumisierte Fasern eingesetzt sind.

2. Verstärkungsmaterial nach Anspruch 1, **dadurch gekennzeichnet, dass** mindestens eine Lage aus volumisierten Fasern vorgesehen ist, die durch einen Nähwirk- oder Venadelungsprozeß verbunden sind.

3. Verstärkungsmaterial nach Anspruch 1 oder 2, bei dem zwei Lagen aus volumisierten Fasern durch einen Nähwirk- oder Venadelungsprozess miteinander verbunden sind, in dem die einzelnen Lagen unterschiedlich ausgerichtet sind.

4. Verstärkungsmaterial nach einem der vorhergehenden Ansprüche, bei dem mindestens eine Lage oder Schicht aus volumisierten Fäden und eine weitere Lage oder Schicht aus nicht volumisierten Fäden besteht.

5. Verstärkungsmaterial nach einem der vorhergehenden Ansprüche, bei dem eine oder auch mehrere Fadenlagen mit unterschiedlicher Ausrichtung der Fasern aus einer Mischung von volumisierten und nicht volumisierten Fäden besteht.

6. Verstärkungsmaterial nach einem der vorhergehenden Ansprüche, bei dem die volumisierten Fäden durch Einbettung von thermoplastischen Mikrohohlkugeln hergestellt sind.

7. Verstärkungsmaterial nach einem der vorhergehenden Ansprüche, bei dem die volumisierten Fäden aus Spinnfäden, Garnen, Zwirnen oder Rovings bestehen.

8. Verstärkungsmaterial nach einem der vorhergehenden Ansprüche, bei dem die volumisierten Fäden aus Glasfasern, Kunststofffasern Polyesterfasern, Aramidfasern oder Carbonfasern bestehen.

9. Verstärkungsmaterial nach einem der vorhergehenden Ansprüche, bei dem unterschiedlich voluminisierte Fasern vorgesehen sind, deren Durchmesser sich um wenigstens 50%, bevorzugt um wenigstens 100% unterscheiden.

10. Verstärkungsmaterial nach einem der vorhergehenden Ansprüche, gebildet durch volumisierte Schnittfaserstapel.

11. Verstärkungsmaterial nach einem der vorhergehenden Ansprüche, welches volumisierte Fäden sowie Endlosfäden mit Lagen aus volumisierten und geschnittenen Stapelfasern mit einer bevorzugten Länge von 0,5 bis 10 cm umfasst.

12. Verfahren zur Herstellung eines Verstärkungsmaterials nach einem der vorhergehenden Ansprüche, wobei man die in einem Roving, Garn oder schwach gedrehten Zwirn parallel angeordneten endlosen Elementarfäden mit hohem Elastizitätsmodul mit einer wässrigen bindehaltigen Suspension von Partikeln der ungeblähten Vorstufe der Hohlkügelchen aus Kunststoff einer Teilchengröße von 5 bis 10 µm aufspreizt oder von einander entfernt und die entstandenen Zwischenräume weitgehend mit den Partikeln ausfüllt und das so erhaltene Material für die erforderliche Dauer der für den Blähprozess der Partikel der Vorstufe erforderlichen Temperatur aussetzt und diese zur Matte unter Verwendung unterschiedlich stark oder nicht aufgeblähter Rovings, Garne oder schwach gedrehten Zwirne und/ oder unter Verwendung von Rovings, Garnen oder schwach gedrehten Zwirnen, die aus anderen Materialien bestehen, weiterverarbeitet.

13. Verfahren zur Herstellung eines Verstärkungsmaterials nach dem vorhergehenden Anspruch, bei dem Fasern unterschiedlich volumisiert werden, indem erste Fasern mit einer ersten wässrigen bindehaltigen Suspension und zweite Fasern mit einer zweiten wässrigen bindehaltigen Suspension aufgespreizt werden, wobei die erste wässrige bindehaltige Suspension einen anderen Binder und/ oder eine andere Menge an Binder enthält als die zweite Suspension.

14. Verfahren zur Herstellung eines Verstärkungsmaterials nach einem der beiden vorhergehenden Verfahrensansprüche, bei dem Fasern unterschiedlich volumisiert werden, indem erste Fasern und zweite Fasern volumisiert werden, wobei die ersten Fasern stärker als die zweiten Fasern gedreht sind.

15. Verwendung des Verstärkungsmaterials nach einem der Ansprüche 1 bis 11 zur Herstellung von Leichtlaminaten aus Duroplasten.

## Claims

1. Reinforcing material formed of volumised fibres by hollow spherules having been embedded between the filaments of the fibres, which are combined in the form of a mat or scrim, **characterised in that** the volumised fibres differ with respect to the material and/or the degree of volumisation, and/or **in that** non-volumised fibres are used.

2. Reinforcing material according to claim 1, **characterised in that** at least one layer of volumised fibres that are joined by a stitch-bonding process or needling process is provided.

3. Reinforcing material according to claim 1 or 2, wherein two layers of volumised fibres are joined with each other by a stitch-bonding process or needling process in which the individual layers are aligned differently.

4. Reinforcing material according to one of the preceding claims, wherein at least one layer or ply consists of volumised threads and a further layer or ply consists of non-volumised threads.

5. Reinforcing material according to one of the preceding claims, wherein one or also several layers of threads having a different alignment of the fibres consist of a mixture of volumised and non-volumised fibres.

6. Reinforcing material according to one of the preceding claims, wherein the volumised threads have been produced by embedding of thermoplastic hollow microspheres.

7. Reinforcing material according to one of the preceding claims, wherein the volumised threads consist of strands, yarns, twists or rovings.

8. Reinforcing material according to one of the preceding claims, wherein the volumised threads consist of glass fibres, plastic fibres, polyester fibres, aramid fibres or carbon fibres.

9. Reinforcing material according to one of the preceding claims, wherein differently voluminised fibres are provided whose diameters differ by at least 50 %, preferably by at least 100 %.

10. Reinforcing material according to one of the preceding claims, formed by volumised chopped-fibre staples.

11. Reinforcing material according to one of the preceding claims, comprising volumised threads as well as endless threads with layers of volumised and chopped staple fibres with a preferred length of 0.5 to 10 cm.

12. Method for producing a reinforcing material according to one of the preceding claims, wherein the endless filaments that have a high modulus of elasticity and are arranged in parallel in a roving, yarn or soft twist are forced apart or separated with an aqueous binder-containing suspension of particles of the uninflated precursor of the hollow spherules of plastic with a particle size of 5 to 10 *µ*m and the resulting interstices are largely filled with particles, and the material thus obtained is exposed for the required time to the temperature required for the inflating process of the particles of the precursor, and those are processed into a mat by using rovings, yarns or soft twists that are inflated to various degrees or not inflated and/or by using rovings, yarns or soft twists that consist of other materials.

13. Method for producing a reinforcing material according to the preceding claim, wherein the fibres are differently volumised by first fibres being forced apart with a first aqueous binder-containing suspension and second fibres being forced apart with a second aqueous binder-containing suspension, the aqueous binder-containing suspension containing a different binder and/or a different amount of binder than the second suspension.

14. Method for producing a reinforcing material according to one of the two preceding process claims, wherein fibres are differently volumised by first fibres and second fibres being volumised, the first fibres being twisted more strongly than the second fibres.

15. Method for producing a reinforcing material according to one of the claims 1 to 11 for the production of lightweight laminates from thermosetting plastics.

## Revendications

1. Matériau de renforcement fabriqué à partir de fibres volumisées dans lesquelles de petites billes creuses sont insérées entre les fils élémentaires desdites fibres, et où lesdites fibres sont rassemblées sous la forme d'un matelas ou d'un tapis, **caractérisé en ce que** les fibres volumisées présentent des différences quant à leur matière et/ou leur degré de volumisation, et/ou **en ce qu'**on utilise des fibres non volumisées en outre introduites.

2. Matériau de renforcement selon la revendication 1, **caractérisé en ce que** l'on prévoit au moins une couche de fibres volumisées, reliées par un procédé de couture ou de tricotage.

3. Matériau de renforcement selon la revendication 1 ou 2, dans lequel deux couches de fibres volumisées sont reliées par un procédé de couture ou de tricotage, dans lequel les couches individuelles sont orientées dans des sens différents.

4. Matériau de renforcement selon l'une des revendications précédentes, dans lequel au moins une couche ou strate est constituée de fils volumisés et une autre couche ou strate est constituée de fils non volumisés.

5. Matériau de renforcement selon l'une des revendications précédentes, dans lequel une ou plusieurs couches de fils ayant une orientation différente des fibres sont à base d'un mélange de fils volumisés et non volumisés.

6. Matériau de renforcement selon l'une des revendications précédentes, dans lequel les fils volumisés sont fabriqués par incorporation de microbilles thermoplastiques creuses.

7. Matériau de renforcement selon l'une des revendications précédentes, dans lequel les fils volumisés sont à base de fils textiles, de filés, de retors ou de rovings.

8. Matériau de renforcement selon l'une des revendications précédentes, dans lequel les fils volumisés sont à base de fibres de verre, de fibres de plastique, de fibres de polyester, de fibres d'aramide ou de fibres de carbone.

9. Matériau de renforcement selon l'une des revendications précédentes, dans lequel on prévoit des fibres de volumisation différente, dont les diamètres se différencient d'au moins 50 %, de préférence d'au moins 100 %.

10. Matériau de renforcement selon l'une des revendications précédentes, formé par un empilement de fibres coupées volumisées.

11. Matériau de renforcement selon l'une des revendications précédentes, qui comprend des fils volumisés ainsi que des fils sans fin avec des couches constituées de fibres empilées volumisées et coupées ayant une longueur préférée de 0,5 à 10 cm.

12. Procédé de fabrication d'un matériau de renforcement selon l'une des revendications précédentes, dans lequel on écarte ou on éloigne les fils élémentaires sans fin disposés en parallèle dans un roving, un filé ou un retors légèrement tordu avec un module d'élasticité élevé avec une suspension aqueuse liante de particules de précurseur non gonflé de petites billes creuses constituées de plastique d'une granulométrie de 5 à 10 µm, et en ce que l'on remplit notablement les interstices ainsi créés par des particules, et en ce que le matériau ainsi obtenu est soumis, pendant une durée adaptée, à une température nécessaire pour le procédé de gonflement des particules de précurseur, et en ce que celui-ci est de nouveau mis en forme en un matelas en utilisant des rovings, des filés ou des retors légèrement tordus à des degrés différents ou non gonflés et/ou en utilisant des rovings, des filés ou des retors légèrement tordus à base de matériaux différents.

13. Procédé de fabrication d'un matériau de renforcement selon la revendication précédente, dans lequel des fibres sont volumisées à différents degrés, en écartant des premières fibres avec une première suspension aqueuse liante et des deuxièmes fibres avec une deuxième suspension aqueuse liante, la première suspension aqueuse liante contenant un liant autre que la deuxième suspension et/ou une quantité de liant autre que la deuxième suspension.

14. Procédé de fabrication d'un matériau de renforcement selon l'une des deux revendications de procédé précédentes, dans lequel des fibres sont volumisées à différents degrés, en volumisant des premières fibres et des deuxièmes fibres, les premières fibres étant soumises à une rotation plus forte que les deuxièmes fibres.

15. Utilisation du matériau de renforcement selon l'une des revendications 1 à 11 pour la fabrication de stratifiés légers en Duroplast.
